Europäisches Patentamt

European Patent Office

Office européen des brevets

(19)

(11) **EP 0 834 116 B1**

(12) **EUROPÄISCHE PATENTSCHRIFT**

(45) Veröffentlichungstag und Bekanntmachung des Hinweises auf die Patenterteilung:
**14.11.2001 Patentblatt 2001/46**

(51) Int Cl.[7]: **G06F 7/52**

(21) Anmeldenummer: **96915961.5**

(86) Internationale Anmeldenummer:
**PCT/DE96/00971**

(22) Anmeldetag: **03.06.1996**

(87) Internationale Veröffentlichungsnummer:
**WO 96/42049 (27.12.1996 Gazette 1996/56)**

(54) **SCHALTUNGSANORDNUNG ZUM VERGLEICH ZWEIER ELEKTRISCHER GRÖSSEN**

CIRCUIT FOR COMPARING TWO ELECTRICAL QUANTITIES

CIRCUIT POUR COMPARER DEUX GRANDEURS ELECTRIQUES

(84) Benannte Vertragsstaaten:
**DE FR GB IT**

(30) Priorität: **09.06.1995 DE 19521091**

(43) Veröffentlichungstag der Anmeldung:
**08.04.1998 Patentblatt 1998/15**

(73) Patentinhaber: **Infineon Technologies AG
81669 München (DE)**

(72) Erfinder:
 • **THEWES, Roland
  D-82178 Puchheim (DE)**
 • **PRANGE, Stefan
  D-81476 München (DE)**
 • **WOHLRAB, Erdmute
  D-81825 München (DE)**
 • **WEBER, Werner
  D-80637 München (DE)**

(74) Vertreter: **Zedlitz, Peter, Dipl.-Inf. et al
Patentanwalt,
Postfach 22 13 17
80503 München (DE)**

(56) Entgegenhaltungen:
**US-A- 3 950 636**

 • **HIDALGO-LOPEZ J A ET AL: "NEW TYPES OF DIGITAL COMPARATORS" 30.April 1995 , 1995 IEEE INTERNATIONAL SYMPOSIUM ON CIRCUITS AND SYSTEMS (ISCAS), SEATTLE, APR. 30 - MAY 3, 1995, VOL. 1, PAGE(S) 29 - 32 , INSTITUTE OF ELECTRICAL AND ELECTRONICS ENGINEERS XP000583173 siehe Zusammenfassung siehe Seite 31, Spalte 1, Zeile 22 - Seite 32, Spalte 1, Zeile 3; Abbildungen 1,2**
 • **IEEE TRANSACTIONS ON ELECTRON DEVICES, Bd. 39, Nr. 6, 1.Juni 1992, Seiten 1444-1455, XP000271791 TADASHI SHIBATA ET AL: "A FUNCTIONAL MOS TRANSISTOR FEATURING GATE-LEVEL WEIGHTED SUM AND THRESHOLD OPERATIONS"**
 • **IEEE TRANSACTIONS ON ELECTRON DEVICES, Bd. 40, Nr. 5, 1.Mai 1993, Seiten 974-979, XP000364271 TADASHI SHIBATA ET AL: "NEURON MOS BINARY-LOGIC INTEGRATED CIRCUITS - PART II: SIMPLIFYING TECHNIQUES OF CIRCUIT CONFIGURATION AND THEIR PRACTICAL APPLICATIONS"**
 • **IEICE TRANSACTIONS ON FUNDAMENTALS OF ELECTRONICS, COMMUNICATIONS AND COMPUTER SCIENCES, Bd. E75 - A, Nr. 7, 1.Juli 1992, Seiten 937-943, XP000311791 KYOKO TSUKANO ET AL: "A NEW CMOS NEURON CIRCUIT BASED ON A CROSS-COUPLED CURRENT COMPARATOR STRUCTURE"**

- **TAHERI B A: "CMOS IMPLEMENTATION AND FABRICATION OF THE PSEUDO ANALOG NEURON" 24.Mai 1993 , PROCEEDINGS OF THE INTERNATIONAL SYMPOSIUM ON MULTIPLE VALUED LOGIC, SACRAMENTO, MAY 24 - 27, 1993, NR. SYMP. 23, PAGE(S) 266 - 270 , INSTITUTE OF ELECTRICAL AND ELECTRONICS ENGINEERS XP000400346** siehe Zusammenfassung siehe Seite 266, Spalte 2, Zeile 31 - Seite 267, Spalte 1, Zeile 2; Abbildung 1 siehe Seite 268, Spalte 1, Zeile 7 - Zeile 26; Abbildung 6

- **PATENT ABSTRACTS OF JAPAN vol. 13, no. 439 (E-827), 3.Oktober 1989 & JP 01 166612 A (HITACHI)**
- **ALTA FREQUENZA, Bd. XXXXVIII, Nr. 11, November 1969, MILANO IT, Seiten 843-852, XP002014108 FERRARI ET AL: "Some new schemes for parallel multipliers"**

**Beschreibung**

Die Aufgabe, zwei elektrische Größen miteinander zu vergleichen, tritt in vielen Gebieten der Technik auf. So sind diese Vergleiche zum Beispiel eine Grundlage der elektrischen Meßtechnik. Auch Schwellenwertgleichungen können mit Hilfe von Bewerterschaltungen technisch realisiert werden.

Verfahren, die elektrische Größen mit Hilfe von Operationsverstärkern vergleichen, sind bekannt und werden häufig verwendet (U. Tietze, Ch. Schenk, Halbleiterschaltungstechnik, 9. Auflage, Springer-Verlag, 1990, S. 132-143). Ein bedeutender Nachteil dieser Verfahren besteht in der Umsetzung statischer Verlustleistung und in dem vergleichsweise großen Platzbedarf derartiger Schaltungen insbesondere dann, wenn eine große Anzahl von ihnen benötigt werden. Eine weitere Möglichkeit, eine Bewertung zweier elektrischer Größen durchzuführen, besteht in der Verwendung eines Neuron-MOS-Inverters, wobei die Referenzgröße, mit der eine andere elektrische Größe verglichen werden soll, durch die Umschaltschwelle des Neuron-MOS-Inverters bestimmt wird (T. Shibata and T. Ohmi, "A functional MOS Transistor featuring gate-level weighted sum and threshold operations", IEEE Trans. Electron Devices, 39, 1992, S. 1444-1455). Die Verwendung eines Neuron-MOS-Inversters in diesem Zusammenhang zeigt einige Nachteile. Es fließt ein statischer Querstrom für alle Potentiale auf dem Floating Gate $\Phi_F$ mit $V_{SS} + V_{th,n} < \Phi_F < V_{DD} - V_{th,p}$, was während des Betriebs als Schwellenwertgatter dem Normalfall entspricht. Außerdem ist eine extrem gute Beherrschung der Technologieparameter erforderlich, damit die Schwellendimensionierung dem gewünschten Verhalten entspricht, das heißt, daß enge Toleranzen der Schwellenwertspannung eingehalten werden müssen.

Aus (J. A. Hidalgo-Lopez et al, New Types of Digital Comparators, IEEE Internat. Symposium of Circuits and Systems (ISCAS), Seattle, 30. April bis 03. Mai 1995, Vol. 1, S. 29-32) ist eine Schaltungsanordnung zum Vergleich zweier elektrischer Ströme bekannt, bei der zwei mitgekoppelte Inverterstufen vorgesehen sind. An den Ausgängen der Inverterstufen sind jeweils die zu vergleichenden elektrischen Größen eingeprägt. Die Source-Anschlüsse beider Inverterstufen sind miteinander verbunden und über einen Takt-Transistor mit Masse verbunden.

Aus US 395 06 36 ist es bekannt, in einer Multipliziererzelle zwei Vergleichseinheiten vorzusehen.

Der Erfindung liegt das Problem zugrunde, zwei elektrische Größen miteinander zu vergleichen unter Vermeidung der im vorigen beschriebenen Nachteile bekannter Verfahren.

Dieses Problem wird durch die Schaltungsanordnung gemäß Patentanspruch 1 gelöst.

Die Schaltungsanordnung besitzt einige Vorteile. Da die Bewertung über Ströme und nicht, wie häufig bei anderen Bewerterschaltungen üblich, über Ladungen stattfindet, ist diese Schaltungsanordnung robuster gegen die Einkopplung von Störsignalen und erlaubt eine sicherere Bewertung als das Prinzip der Ladungsbewertung. Damit können z.B. enge Toleranzen für die Schwellenwertbildung bei der Realisierung von Schwellenwertgleichungen eingehalten werden. Ein weiterer Vorteil liegt darin, daß das Ausgangssignal komplementär an zwei Ausgängen vorliegt, wobei voller CMOS-Hub mit guter Treiberfähigkeit erreicht wird. Bei vielen Anwendungen spart diese Tatsache einen Inverter zur Erzeugung des invertierten Signals oder aufwendige Treiberschaltungen. Auch hat die Schaltungsanordnung speichernde Eigenschaften, was in Schaltungsarchitekturen mit Pipelining vorteilhaft genutzt werden kann. Weiterhin liegt ein Vorteil dieser Schaltungsanordnung darin, daß im Ruhezustand kein Querstrom fließt. Die Tatsache, daß nur eine Steuerleitung benötigt wird, ist vor allem in Array-Schaltungen von Vorteil. Durch die hohe Stabilität der Schaltung ist die Dimensionierung der Schaltung unkritisch. Üblicherweise kann die Realisierung mit Minimal-Transistoren erfolgen. Dies führt zusammen mit der geringen Zahl von Transistoren zu einem günstigen Flächenverbrauch für die Gesamtschaltung innerhalb einer integrierten Schaltung. Außerdem kippt die Schaltung sehr schnell in einen stabilen Zustand, woraus sich ergibt, daß die Schaltung für Hochfrequenzschaltungen sehr gut geeignet ist.

Weiterbildungen der Erfindung ergeben sich aus den abhängigen Ansprüchen.

Ein Ausführungsbeispiel der Erfindung ist in den Zeichnungen dargestellt und wird im folgenden näher beschrieben.

Es zeigen

Figur 1          eine Zeichnung, die die erfindungsgemäße Schaltungsanordnung darstellt;

Figur 2          eine Skizze einer Schaltungsanordnung, in der die Bewerterschaltung aus Figur 1 zwei elektrische Größen miteinander vergleicht, die jeweils von einem MOS-Feldeffekttransistor gebildet werden;

Figur 3          eine Skizze einer Schaltung, in der die Bewerterschaltung aus Figur 1 zwei elektrische Größen miteinander vergleicht, die jeweils von einem Neuron-MOS-Feldeffekttransistor gebildet werden;

Figur 4          eine Skizze einer Schaltung, in der die Bewerterschaltung aus Figur 1 zwei elektrische Größen miteinander vergleicht, die jeweils von einem Neuron-MOS-Feldeffekttransistor gebildet werden, bei der zusatzlich der Ausgang der Bewerterschaltung entkoppelt ist;

| Figur 5 | eine Skizze, die die Anwendung der Bewerterschaltung zur Realisierung einer Multipliziererzelle unter Anwendung von Neuron-MOS-Feldeffekttransistoren beschreibt; |
| --- | --- |
| Figuren 6 bis 11 | Zeichnungen, die mögliche Schaltungsanordnungen darstellen zur chipinternen Generierung eines Referenzstroms; |
| Figuren 12 und 13 | den Aufbau der erfindungsgemäßen Schaltungsanordnung, wenn der erste Querstrom $I_1$ und der zweite Querstrom $I_2$ über das Betriebspotential $V_{DD}$ eingeprägt werden. |

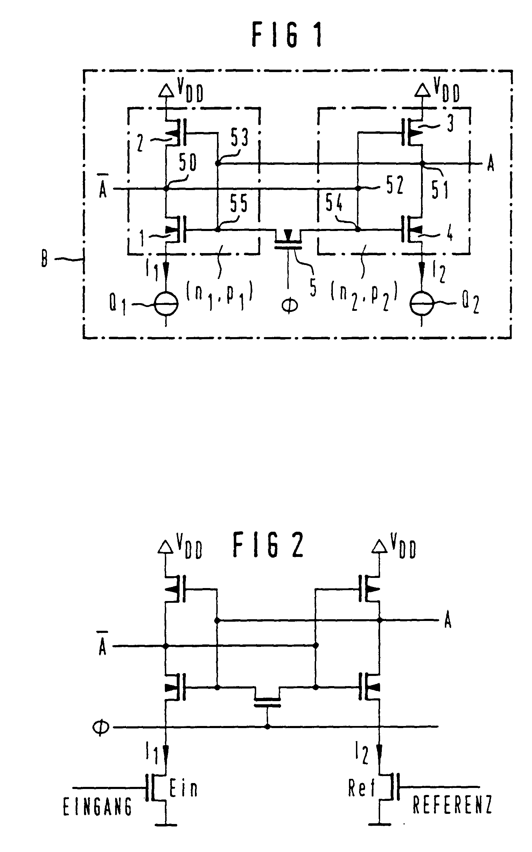

Anhand der Figuren 1 bis 10 wird die erfindungsgemäße Schaltungsanordnung weiter erläutert.

Figur 1 beschreibt eine Schaltungsanordnung B zur Realisierung von Bewertungen von zwei elektrischen Größen. Dabei sollen zwei durch zwei Stromquellen, der ersten Stromquelle $Q_1$ und der zweiten Stromquelle $Q_2$ generierte Querströme $I_1$ und $I_2$ miteinander verglichen werden in der Weise, daß an einem Ausgang 51 einer zweiten Inverterstufe ($n_2$, $p_2$) ein Betriebspotential $V_{DD}$ anliegt, wenn der erste Querstrom $I_1$ größer ist als der zweite Querstrom $I_2$. An einem Ausgang 50 einer ersten Inverterstufe ($n_1$, $p_1$) liegt in diesem Fall das Potential von 0 Volt an.

Die Schaltungsanordnung besteht aus der ersten Inverterstufe ($n_1$, $p_1$) mit einem n-Kanal-MOS-Feldeffekttransistor 1 und einem p-Kanal-MOS-Feldeffekttransistor 2, durch die der erste Querstrom $I_1$ fließt. Durch die zweite Inverterstufe ($n_2$, $p_2$) fließt der zweite Querstrom $I_2$. Der Ausgang 50 der ersten Inverterstufe ($n_1$, $p_1$) ist mit dem Eingang 52 der zweiten Inverterstufe ($n_2$, $p_2$) verbunden. Der Ausgang 51 der zweiten Inverterstufe ($n_2$, $p_2$) ist mit dem Eingang 53 der ersten Inverterstufe ($n_1$, $p_1$) verbunden. Der Eingang 53 der ersten Inverterstufe ($n_1$, $p_1$) ist außerdem verbunden mit einem zweiten Anschluß 55 einer Rücksetzeinheit 5. Ein erster Anschluß 54 der Rücksetzeinheit 5 ist verbunden mit dem Eingang 52 der zweiten Inverterstufe ($n_2$, $p_2$). Über ein Steuersignal Φ an dem Gate-Anschluß der Rücksetzeinheit 5 wird die Potentialdifferenz zwischen einem ersten Ausgangspotential A, das an dem Ausgang 51 der zweiten Inverterstufe ($n_2$, $p_2$) anliegt, und einem zweiten Ausgangspotential $\overline{A}$, das an dem Ausgang 50 der ersten Inverterstufe ($n_1$, $p_1$) anliegt, ausgeglichen.

Zur Erklärung der Funktion der Schaltungsanordnung B wird angenommen, daß an dem Ausgang 51 der zweiten Inverterstufe ($n_2$, $p_2$) und dem Ausgang 50 der ersten Inverterstufe ($n_1$, $p_1$) zunächst gleiches Potential herrsche. Wenn der erste Querstrom $I_1$ größer ist als der zweite Querstrom $I_2$, so liegt an dem Ausgang 50 der ersten Inverterstufe ($n_1$, $p_1$) ein etwas niedrigeres Potential an als an dem Ausgang 51 der zweiten Inverterstufe ($n_2$, $p_2$). Dadurch leitet der p-Kanal-MOS-Feldeffekttransistor 3, dessen Gate-Anschluß mit dem Ausgang 50 der ersten Inverterstufe ($n_1$, $p_1$) gekoppelt ist, besser als der p-Kanal-MOS-Feldeffekttransistor 2, wodurch das Potential an dem Ausgang 51 der zweiten Inverterstufe ($n_2$, $p_2$) angehoben wird bis schließlich das Betriebspotential $V_{DD}$ erreicht ist. Entsprechend wird am Ausgang 50 der ersten Inverterstufe ($n_1$, $p_1$) schließlich ein Potential von 0 Volt erreicht. Damit ist ein stabiler Zustand der Schaltungsanordnung erreicht.

Fließt zum Zeitpunkt der Bewertung durch die zweite Inverterstufe ($n_2$, $p_2$) ein zweiter Querstrom $I_2$, der größer ist als der erste Querstrom $I_1$, so stellt sich entsprechend dem im vorigen beschriebenen Prozeß an dem Ausgang 51 der zweiten Inverterstufe ($n_2$, $p_2$) ein Potential von 0 Volt und an dem Ausgang 50 der ersten Inverterstufe ($n_1$, $p_1$) ein Betriebspotential $V_{DD}$ ein.

Die Schaltung hat während des Bewertungsvorgangs eine sehr hohe innere Verstärkung und nach Abschluß des Bewertungsvorgangs eine gute Treiberfähigkeit und kann deshalb bei hohen Frequenzen betrieben werden.

Bevor eine neue Bewertung erfolgen kann, muß die Potentialdifferenz zwischen dem ersten Ausgangspotential A und dem zweiten Ausgangspotential $\overline{A}$ ausgeglichen werden, d.h. die Schaltungsanordnung muß zurückgesetzt werden. Dies geschieht durch eine durch einen n-Kanal-MOS-Feldeffekttransistor realisierte Rücksetzeinheit 5, der über ein Steuersignal Φ gesteuert wird. Es ist auch möglich, anstatt eines n-Kanal-MOS-Feldeffekttransistors einen p-Kanal-MOS-Feldeffekttransistor zu verwenden, um die Rücksetzeinheit 5 zu realisieren.

Der Ladungsausgleich kann abhängig von unsymmetrischen Lasten an dem Ausgang 51 der zweiten Inverterstufe ($n_2$, $p_2$) bzw. dem Ausgang 50 der ersten Inverterstufe ($n_1$, $p_1$) zu einem Ausgleich auf hohem oder niedrigem Pegel führen. Wenn ein n-Kanal-MOS-Feldeffekttransistor zur Realisierung der Rücksetzeinheit 5 verwendet wird, so erfolgt auf niedrigem und mittlerem Pegel ein guter Ausgleich der beiden Ausgangspotentiale A und $\overline{A}$. Bei hohen Pegeln nahe dem Betriebspotential $V_{DD}$ ist der Ausgleich unter Umständen unvollständig. Dann leiten die MOS-Feldeffekttransistoren 2 und 3 schlecht, aber die MOS-Feldeffekttransistoren 1 und 4 gut. Dies führt zu einem schnellen Absenken des Potentials auf niedrigeres Niveau, bei dem der n-Kanal-MOS-Feldeffekttransistor 5 besser leitet und den Potentialausgleich herbeiführen kann. Eine analoge Argumentation führt auch bei Verwendung eines p-Kanal-MOS-Feldeffekttransistors anstelle des n-Kanal-MOS-Feldeffekttransistors zur Realisierung der Rücksetzeinheit 5 zu einem guten Ausgleich der Potentiale an dem Ausgang 50 der ersten Inverterstufe ($n_1$, $p_1$) und dem Ausgang 51 der zweiten Inverterstufe ($n_2$, $p_2$). Wenn das Steuersignal Φ abgeschaltet wird, beginnt die neue Bewertung, die zu neuen Werten an den Ausgängen führt.

Die Schaltungsanordnung B kann, wie in Figur 2 dargestellt, auch eine Potentialdifferenz zwischen einem Eingangspotential und einem Referenzpotential vergleichen, wodurch z. B. die Realisierung einer Schwellenwertgleichung möglich ist. Wenn ein Potential an einem Gate-Anschluß eines ersten MOS-Feldeffekttransistor Ein größer ist als ein Referenzpotential an einem zweiten Neuron-MOS-Transistor Ref und wenn der Drainstrom des ersten MOS-Feldeffekttransistors Ein den ersten Querstrom $I_1$ bildet und der Drainstrom des zweiten MOS-Feldeffekttransistors Ref den zweiten Querstrom $I_2$ bildet in der Schaltungsanordnung B, so fließt der erste Querstrom $I_1$ durch die Schaltungsanordnung B, der größer ist als der zweite Querstrom $I_2$, in diesem Zusammenhang der Referenzstrom. Die Schaltungsanordnung B kippt in einen definierten Zustand nach der im vorigen beschriebenen Funktionalität der Schaltungsanordnung B. Damit stellt der Ausgangszustand direkt eine Bewertung der Eingangspotentiale dar.

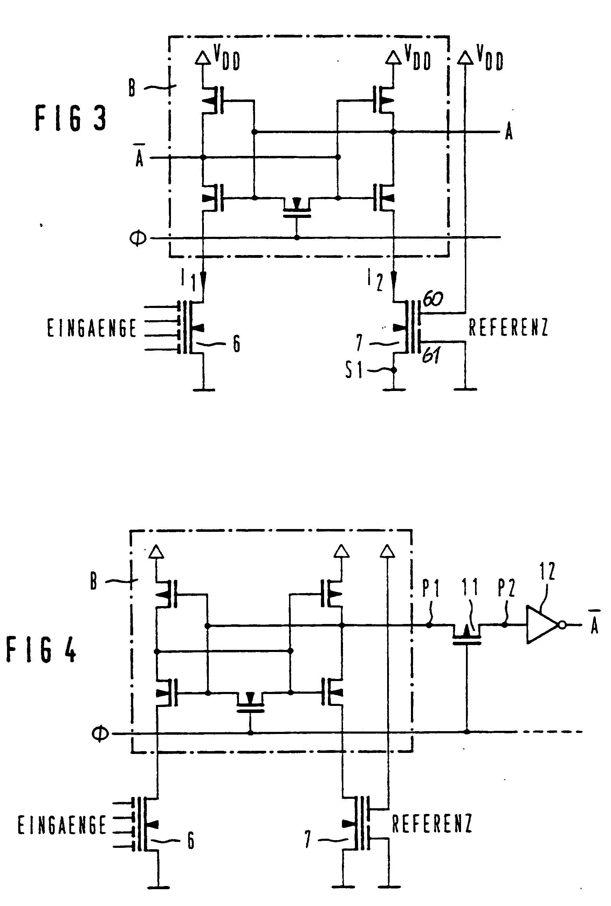

Wie in Figur 3 dargestellt ist, kann die erste Stromquelle $Q_1$ auch durch einen Neuron-MOS-Feldeffekttransistor 6 realisiert werden, an dessen Gate-Anschlüssen bestimmte Eingangspotentiale angelegt sind. Entsprechend den Eingangspotentialen können die Gate-Kapazitäten des Neuron-MOS-Feldeffekttransistors 6 dimensioniert werden. Der Source-Anschluß des Neuron-MOS-Feldeffekttransistor 6 ist an das zweite Betriebspotential $V_{SS}$ gelegt.

Durch den Neuron-MOS-Feldeffekttransistor 7 wird die Referenzstromquelle $Q_2$ realisiert. Ein erster Gate-Anschluß 60 des Neuron-MOS-Feldeffekttransistors 7 ist an das Betriebspotential VDD gelegt. Ein zweiter Gate-Anschluß 61 sowie der Anschluß S1 des Neuron-MOS-Feldeffekttransistors 7 ist an ein Massepotential gelegt. Somit kann über die Dimensionierung der Gate-Kapazitäten der zwei Gate-Anschlüsse 60 und 61 des Neuron-MOS-Feldeffekttransistor 7 der Referenzstrom $I_2$ eingestellt werden.

Die Bewertung findet hier über die Querströme statt, die durch die Neuron-MOS-Transistoren 6 und 7 fließen. Diese Bewertung ist robust gegen die Einkopplung von Störsignalen und erlaubt somit eine sicherere Bewertung als das Prinzip der Ladungsbewertung, wie es zum Beispiel in Leseverstärkern von Speichern üblich ist. Damit können enge Toleranzen für eine Schwellenwertbildung eingehalten werden. Geringe Potentialunterschiede am Floating Gate von 20 Milli-Volt können somit noch sicher getrennt und richtig bewertet werden.

Das Ausgangssignal liegt komplementär an zwei Ausgängen vor, wobei voller Hub mit guter Treiberfähigkeit erreicht wird. Bei vielen Anwendungen spart man dadurch einen Inverter zur Erzeugung des invertierten Signals oder aufwendige Treiberschaltungen. Außerdem haben der Ausgang 50 der ersten Inverterstufe ($n_1$, $p_1$) und der Ausgang 51 der zweiten Inverterstufe ($n_2$, $p_2$) speichernde Eigenschaften, was in Schaltungsarchitekturen mit Pipelining vorteilhaft genutzt werden kann.

Zusätzlich kann zur Pufferung der Ausgangssignale der Schaltungsanordnung B an mindestens einem Ausgang der Schaltungsanordnung B eine Puffereinheit 11, 12 vorgesehen sein, wie in Figur 4 dargestellt ist. Diese kann z.B. aus einem Inverter 12 und einem Transfertransistor 11 aufgebaut sein. Dabei ist der Gate-Anschluß des Transfertransistors 11 an das Steuersignal Φ gekoppelt. Der Anschluß P1 des Transfertransistors 11 ist mit dem Ausgangssignal der Schaltungsanordnung B gekoppelt. Der Anschluß P2 des Puffertransistors 11 ist mit einem Eingang des Inverters 12 verbunden.

Bei dem Zurücksetzen der Schaltungsanordnung B, also bei aktiviertem Steuersignal Φ, wird der Transfertransistor 11 abgeschaltet. Somit bleibt der Wert des vorangehenden Ausgangspotentials A auf einer Eingangskapazität des Inverters 12 gespeichert. Entsprechend bleibt der invertierte Wert des Ausgangspotentials A, also $\bar{A}$ am Ausgang des Inverters 12 erhalten. Wenn das Steuersignal Φ deaktiviert ist, leitet der Transfertransistor 11 und der Wert des neuen Ausgangspotentials A wird nun an den Eingang des Inverters 12 durchgeschaltet. Dieser Wert wird durch den Inverter 12 invertiert, sodaß der invertierte Wert des Ausgangspotentials A, also $\bar{A}$, gepuffert vorliegt.

Im Ruhezustand fließt in der Schaltungsanordnung B kein Querstrom. Dies ist ein wichtiger Vorteil gegenüber vielen anderen Bewerterschaltungen. Auch ist nur ein Steuersignal Φ nötig, was vorteilhaft ist für Array-Schaltungen.

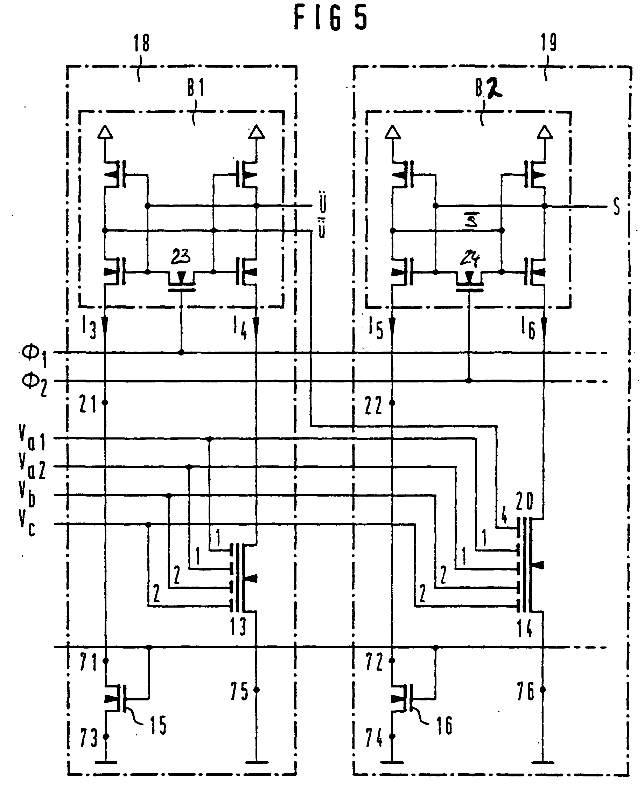

Eine Anwendung der Schaltungsanordnung B ist in Figur 5 dargestellt. Hier sind eine erste Bewertungsschaltung B1 und eine zweite Bewertungsschaltung B2 mit einem dritten Neuron-MOS-Transistor 13 und einem vierten Neuron-MOS-Transistor 14 und einem ersten Bewertungstransistor 15 und einem zweiten Bewertungstransistor 16 verbunden in der Weise, daß die Gesamtschaltung die Funktion einer Multipliziererzelle repräsentiert. Die Gate-Anschlüsse des dritten und des vierten Neuron-MOS-Transistors 13 und 14 sind jeweils mit den Eingangspotentialen $V_{a1}$, $V_{a2}$, $V_b$ und $V_c$ der Schaltung verbunden. Hierbei repräsentiert das Eingangspotential $V_{a1}$ ein Multiplikatorbit und das Eingangspotential $V_{a2}$ ein Multiplikandenbit, die beide in der Multipliziererzelle verarbeitet werden. Das Potential $V_b$ repräsentiert das Summen-Bit eines vorangehenden Partialprodukts. Das Eingangspotential $V_c$ stellt das Übertrags-Bit eines vorangehenden Partialprodukts dar. Die Eingangspotentiale $V_{a1}$, $V_{a2}$, $V_b$ und $V_c$ werden bei dem dritten und dem vierten Neuron-MOS-Transistor 13 und 14 gewichtet in der Weise, daß die Eingangspotentiale $V_{a1}$ und $V_{a2}$ einfach und $V_b$ und $V_c$ relativ dazu zweifach gewichtet werden.

Die erste Bewerterschaltung B1, die über einen Steuertransistor 23 mit einem Gate-Anschluß des Steuertransistors 23 mit einem Steuersignal $\Phi_1$ verbunden ist, bildet durch Vergleich des Referenzstroms $I_3$ mit dem durch den dritten Neuron-MOS-Feldeffekttransistor 13 fließenden Querstrom $I_4$ den Wert des Ausgangs-Übertrags-Bits ü der Multipliziererzelle. Die Funktion der ersten Bewertungsschaltung B1 und der zweiten Bewertungsschaltung B2 ist verglichen mit der im vorigen beschriebenen Schaltungsanordnung B unverändert.

Der Vergleich der Eingangsströme $I_3$ und $I_4$ durch die erste Bewertungsschaltung B1, des Referenzstroms $I_3$ mit dem durch den Neuron-MOS-Transistor 13 fließenden Querstrom $I_4$, stellt eine technische Realisierung einer Schwellenwertgleichung dar. Der logische Wert des Ausgangs-Übertrags-Bits ü der ersten Bewertungsschaltung B1 ist dann und nur dann logisch eins, wenn der Querstrom $I_4$ größer ist als der Referenzstrom $I_3$. Mit der im vorigen beschriebenen Gewichtung der Eingangssignale an den Gate-Anschlüssen des dritten Neuron-MOS-Transistors 13 und eines Referenzstroms $I_3$, der einen logischen Wert 3,5 repräsentiert, stellt die Teilschaltungsanordnung 18 insgesamt folgende Schwellenwertgleichung dar:

$$a_1 + a_2 + 2b + 2c > 3,5.$$

Hierbei repräsentieren $a_1$ und $a_2$ das Multiplikatorbit und das Multiplikandenbit, die in der Multipliziererzelle verarbeitet werden. Das Summen-Bit eines vorangehenden Partialprodukts wird durch b repräsentiert. Das Übertrags-Bit eines vorangehenden Partialproduktes wird durch das Symbol c gekennzeichnet.

Die Teilschaltungsanordnung 19 der Multipliziererzelle bildet aus den im vorigen beschriebenen Eingangspotentialen und dem negierten Ausgangs-Übertrags-Bits $\bar{ü}$ der im vorigen beschriebenen Teilschaltungsanordnung 18 das Ausgangs-Summen-Bit der Multipliziererzelle. Hierbei ist das durch den Ausgang $\bar{ü}$ repräsentierte negierte Ausgangs-Übercrags-Bit mit dem Wert 4 gewichtet und mit einem fünften Gate-Anschluß 20 des vierten Neuron-MOS-Transistors 14 verbunden. Die Funktion der Teilschaltungsanordnung 19 ist entsprechend der im vorigen beschriebenen Teilschaltungsanordnung 18 in der Weise, daß ein Referenzstrom $I_5$ mit dem durch den vierten Neuron-MOS-Transistor 14 fließenden Querstrom $I_6$ verglichen wird. Die durch diese Teilschaltung 19 repräsentierte Schwellenwertgleichung lautet:

$$a_1 + a_2 + 2b + 2c + 4\bar{ü} > 5,5.$$

Der Referenzstrom $I_5$, der einen logischen Wert von 5,5 repräsentiert, ist ein Querstrom des zweiten Bewertungstransistors 16. Die logischen Werte, die durch die Referenzströme $I_3$ und $I_5$ dargestellt werden, werden über entsprechende Dimensionierungen der Bewertungstransistoren 15 und 16 erreicht, die durch MOS-Feldeffekttransistoren realisiert werden. Hierbei ist der Anschluß 71 des ersten Bewertungstransistors 15 mit dem Eingang 21 der ersten Bewertungsschaltung B1 verbunden. Der Anschluß 72 des zweiten Bewertungstransistors 16 ist mit dem Eingang 22 der Bewerterschaltung 17 verbunden.

Die Gate-Anschlüsse der Bewertungstransistoren 15 und 16 sind mit einem Referenz-Potential VRef gekoppelt. Die Anschlüsse 73 und 74 der Bewertungstransistoren 15 und 16 sind mit dem Massepotential gekoppelt. Ebenso mit dem Massepotential gekoppelt sind die Anschlüsse 75 und 76 des dritten Neuron-MOS-Feldeffekttransistors 13 und des vierten Neuron-MOS-Feldeffekttransistors 14.

Der MOS-Feldeffekttransistor 23 der Teilschaltungsanordnung 18 ist mit seinem Gateanschluß an das Steuersignal $\Phi_1$ gekoppelt. Wenn der MOS-Feldeffekttransistor 23 leitend gemacht wird, wird die Potentialdifferenz zwischen dem negierten Ausgangs-Übertrags-Bit $\bar{ü}$ und dem Ausgangs-Übertrags-Bit ü ausgeglichen. Das Gleiche gilt entsprechend für den MOS-Feldeffekttransistor 24, der mit seinem Gate-Anschluß mit einem Steuersignal $\Phi_2$ gekoppelt ist. In der Teilschaltungsanordnung 19 wird durch den MOS-Feldeffekttransistor 24 die Potentialdifferenz zwischen dem negierten Ausgang-Summen-Bit $\bar{s}$ und Ausgangs-Summen-Bit s ausgeglichen, wenn der MOS-Feldeffekttransistor 24 leitend gemacht wird.

In der folgenden Tabelle ist eine Wahrheitstabelle für die binäre Multiplikation angegeben zur Bestätigung der Funktionsweise der im vorigen beschriebenen Multipliziererzelle.

| $a_1$ | $a_2$ | b | c | ü | s | $a_1/2+a_2/2+b+c$ | $a_1/2+a_2/2+b+c-2ü$ |
|---|---|---|---|---|---|---|---|
| | | | | | | | |
| 0 | 0 | 0 | 0 | 0 | 0 | 0 | 0 |
| 0 | 0 | 0 | 1 | 0 | 1 | 1 | 1 |
| 0 | 0 | 1 | 0 | 0 | 1 | 1 | 1 |
| 0 | 0 | 1 | 1 | 1 | 0 | 2 | 0 |
| 0 | 1 | 0 | 0 | 0 | 0 | 0,5 | 0,5 |

(fortgesetzt)

| $a_1$ | $a_2$ | b | c | ü | s | $a_1/2+a_2/2+b+c$ | $a_1/2+a_2/2+b+c-2ü$ |
|---|---|---|---|---|---|---|---|
| 0 | 1 | 0 | 1 | 0 | 1 | 1,5 | 1,5 |
| 0 | 1 | 1 | 0 | 0 | 1 | 1,5 | 1,5 |
| 0 | 1 | 1 | 1 | 1 | 0 | 2,5 | 0,5 |
| 1 | 0 | 0 | 0 | | 0 | 0,5 | 0,5 |
| 1 | 0 | 0 | 1 | 0 | 1 | 1,5 | 1,5 |
| 1 | 0 | 1 | 0 | 0 | 1 | 1,5 | 1,5 |
| 1 | 0 | 1 | 1 | 1 | 0 | 2,5 | 0,5 |
| 1 | 1 | 0 | 0 | 0 | 1 | 1 | 1 |
| 1 | 1 | 0 | 1 | 1 | 0 | 2 | 0 |
| 1 | 1 | 1 | 0 | 1 | 0 | 2 | 0 |
| 1 | 1 | 1 | 1 | 1 | 1 | 3 | 1 |

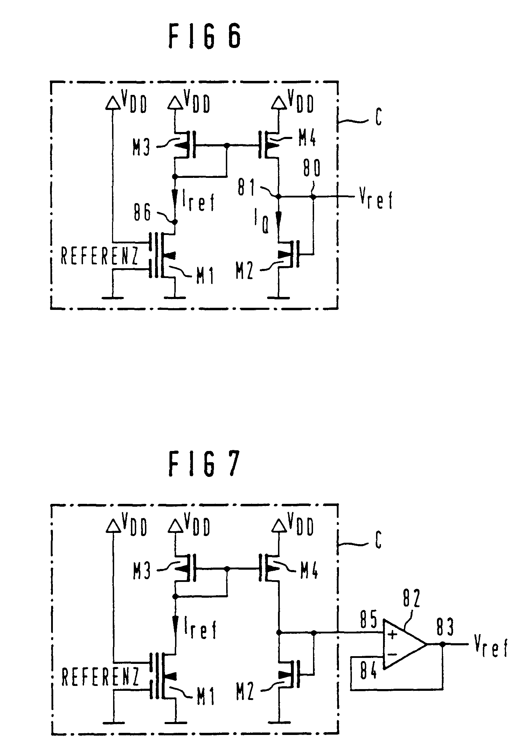

Statt durch einen Neuron-MOS-Feldeffekttransistor (vgl. Figur 3) kann eine Referenzbildung zur Generierung des zweiten Querstroms $I_2$ auch global für mehrere Schaltungsanordnungen B vorgenommen werden, wie in Figur 5 darstellt. Dies erfordert das extern zugeführte oder intern generierte Referenz-Potential $V_{Ref}$. Dies kann vorteilhaft sein, wenn eine Feineinstellung des Referenzstroms $I_2$ erwünscht ist.Darüberhinaus wird auf diese Weise der Platzbedarf der Schaltung erheblich reduziert, da der Platzbedarf von MOS-Feldeffekttransistoren deutlich geringer ist als der Platzbedarf von Neuron-MOS-Feldeffekttransistoren. Schaltungen zur internen Generierung des Referenz-Potentials $V_{Ref}$ und damit, für jede erfindungsgemäße Schaltungsanordnung, an die das Referenz-Potential $V_{Ref}$ erfindungsgemäß angelegt ist, auch des zweiten Querstroms $I_2$ sind in den Figuren 6 bis 11 dargestellt und werden im weiteren erläutert. Gemeinsam ist allen im weiteren beschriebenen Schaltungen, daß ein Neuron-MOS-Feldeffekttransistor M1 zur Generierung eines zweiten Referenzstroms $I_{Ref}$ verwendet wird. Der zweite Referenzstrom $I_{Ref}$ wird über eine Stromspiegelschaltung in einen MOS-Feldeffekttransistor M2 eingespeist, der als Strom-Potential-Wandler betrieben wird. Der MOS-Feldeffekttransistor M2 stellt an den Anschlüssen 80 und 81 ein Referenzpotential $V_{Ref}$ zur Verfügung. Gegebenenfalls kann das resultierende Referenzpotential $V_{Ref}$ durch einen Operationsverstärker gepuffert werden. Die in den Figuren 6 bis 11 dargestellten Schaltungen erlauben eine sehr genaue Einstellung des Referenzpotentials auch bei stark unterschiedlichen Dicken der Dielektrika von Neuron-MOS-Feldeffekttransistoren und MOS-Feldeffekttransistoren.

Zur genaueren Einstellung der Schaltschwelle kann bei Neuron-MOS-Transistoren mindestens ein zusätzlicher Gate-Anschluß vorgesehen sein, mit dem man eine Feinjustierung der Schaltschwelle entsprechend der Koppelkapazität des zusätzlichen Gate-Anschlusses durchführen kann.

Darüberhinaus ist der Platzbedarf der Gesamtschaltung erheblich reduziert wenn der Referenzanschluß für mehrere Schaltungsanordnungen B genutzt wird..

In der in Figur 6 dargestellten Schaltungsanordnung C bilden p-MOS-Feldeffekttransistoren M3 und M4 einen Stromspiegel. M3 setzt dabei einen durch den Neuron-MOS-Feldeffekttransistor M1 generierten zweiten Referenzstrom $I_{Ref}$ in ein äquivalentes Gate-Potential um. Da M4 ebenfalls mit diesem Gate-Potential betrieben wird, fließt durch M4 ein weiterer Querstrom $I_Q$, der näherungsweise gleich dem zweiten Referenzstrom $I_{Ref}$ ist und einem MOS-Feldeffekttransistor M2 eingeprägt ist. Dieser setzt den weiteren Querstrom $I_Q$ in ein äqivalentes GatePotential um. Das äquivalente Gate-Potential stellt das Referenz-Potential $V_{ref}$ dar, das in der erfingdungsgemäßen Schaltungsanordnung verwendet werden kann.

Um ein durch eine in Figur 6 beschriebene Schaltungsanordnung C generiertes Referenzpotential niederohmiger und damit robuster gegenüber Störsignalen zu gestalten, wird das Referenz-Potential $V_{Ref}$ gepuffert unter Verwendung eines Operationsverstärkers 82 (vgl. Figur 7). Bei dem Operationsverstärker 82 ist ein Ausgang 83 mit einem invertierenden Eingang 84 des Operationsverstärkers 82 kurzgeschlossen. Das Referenz-Potential $V_{Ref}$ ist an einen nicht invertierenden Eingang 85 des Operationsverstärkers 82 gelegt, das gepufferte Referenz-Potential $V_{Ref}$ liegt an dessen Ausgang 83 an.

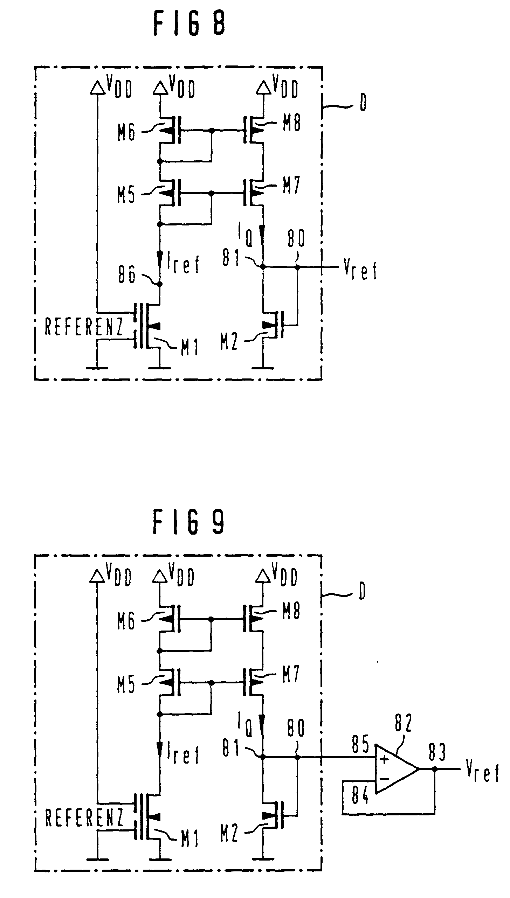

In einer in Figur 8 beschriebenen Schaltungsanordnung D wird anstatt eines einfachen Stromspiegels, bestehend aus den MOS-Feldeffekttransistoren M3 und M4, ein Cascode-Stromspiegel, gebildet aus MOS-Feldeffekttransistoren M5, M6, M7 und M8, verwendet. Dieser Stromspiegel hat gegenüber dem einfachen Stromspiegel, beschrieben in Figur 6, den Vorteil, daß die Abweichungen zwischen Eingangsstrom $I_{Ref}$ und Ausgangsstrom $I_Q$ des Stromspiegels wesentlich geringer sind. Dies ermöglicht eine höhere Genauigkeit bei der Generierung des Referenz-Potentials $V_{Ref}$. Die Schaltungsanordnung D birgt noch einen weiteren Vorteil in sich. Die Generierung des zweiten Referenzstroms $I_{Ref}$ durch den Neuron-MOS-Feldeffekttransistor M1 ist umso genauer, je näher der Wert des Drainpotentials M1 an einem Mittelwert des Neuron-MOS-Feldeffekttransistors des Drainpotentials $V_{DO}$ eines Eingangstransistors in einer Schaltung gemäß Figur 3 zum Zeitpunkt der Bewertung liegt. Der Wert des Drainpotentials liegt - relativ zum Betriebspotential $V_{DD}$ - bei nicht sehr hohen Werten. Da in der Schaltungsanordnung D der Spannungsabfall zwischen dem Betriebspotential $V_{DD}$ und dem Anschluß 86 des MOS-Feldeffekttransistors M1 höher ist als in der in Figur 6 beschriebenen Schaltungsanordnung C, ergibt sich in Figur 8 ein Drainpotential am MOS-Feldeffekttransistor M1, das näher bei dem Mittelwert $V_{DO}$ liegt als in der in Figur 6 beschriebenen Schaltungsanordnung C.

Figur 9 stellt die in Figur 8 beschriebene Schaltungsanordnung D mit gepuffertem Referenz-Potential $V_{Ref}$ dar. Die Pufferung der Referenzspannung $V_{Ref}$ wird auf dieselbe Weise durchgeführt wie im vorigen beschrieben.

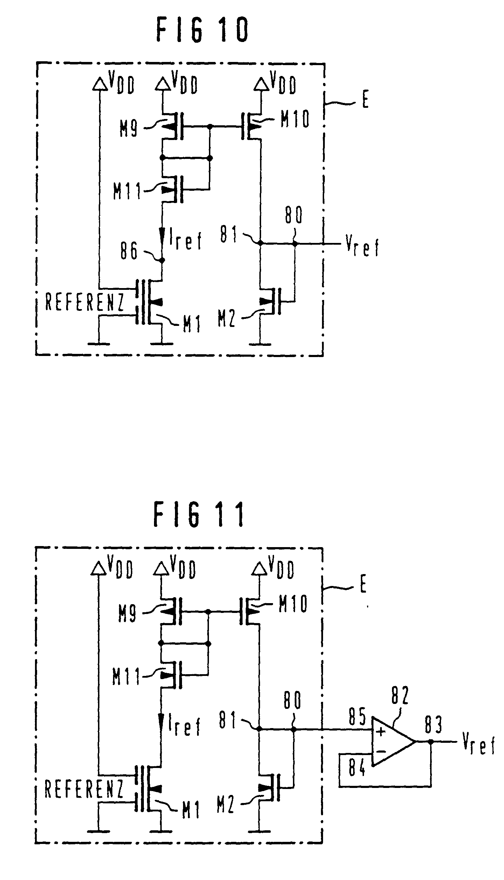

In der in Figur 10 beschriebenen Schaltungsanordnung E ist wieder ein einfacher Stromspiegel, bestehend aus den MOS-Feldeffekttransistoren M9 und M10, vorgesehen, wie in der Schaltungsanordnung C in Figur 6. Jedoch sorgt der im Strompfad vom zweiten Referenzstrom $I_{Ref}$ sich befindende MOS-Feldeffekttransistor M11 für ein reduziertes Drainpotential von M1 gegenüber der in Figur 6 dargestellten Schaltungsanordnung C. Der Vorteil einer solchen Maßnahme wurde im vorigen erläutert.

Figur 11 stellt die in Figur 10 beschriebene Schaltungsanordnung E mit gepufferter Referenzspannung $V_{Ref}$ dar. Die Pufferung des Referenz-Potentials $V_{Ref}$ wird auf die im vorigen beschriebene Weise durchgeführt.

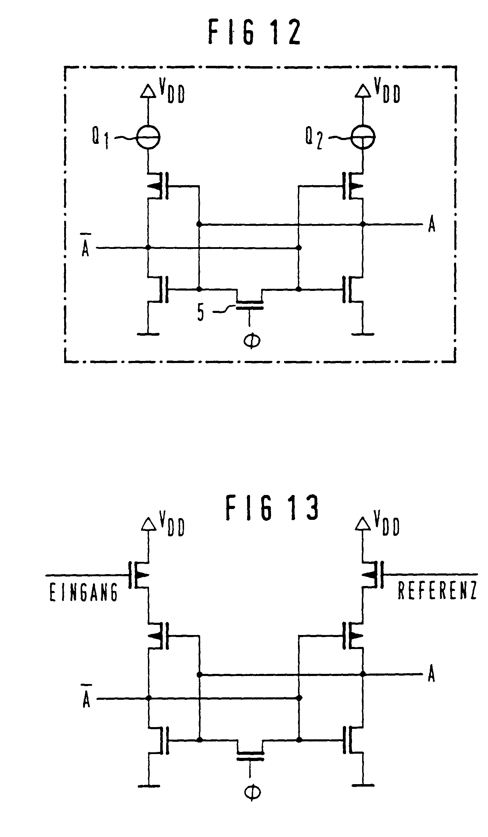

Eine weitere Möglichkeit zur Realisierung der erfindungsgemäßen Schaltungsanordnung besteht darin, den ersten Querstrom ($I_1$) und den zweiten Querstrom ($I_2$) über das Betriebspotential VDD einzuprägen. In diesem Fall ergeben sich die in den Figuren 12 und 13 dargestellten Schaltungsanordnungen.

**Patentansprüche**

1. Schaltungsanordnung zum Vergleich zweier elektrischer Größen,

   - bei der eine erste Stromquelle ($Q_1$) vorgesehen ist, die einen ersten Querstrom ($I_1$) liefert, der durch eine erste Inverterstufe ($n_1$, $p_1$) aufgebaut aus Transistoren fließt, wobei, die erste Stromquelle ($Q_1$) mit einem Source-Anschluß der ersten Inverterstufe ($n_1$, $p_1$) verbunden ist,
   - bei der eine Referenzstromquelle ($Q_2$) vorgesehen ist, die einen zweiten Querstrom ($I_2$) liefert, der durch eine zweite Inverterstufe ($n_2$, $p_2$) aufgebaut aus Transistoren fließt, wobei die Referenzstromquelle ($Q_2$) mit einem Source-Anschluß der zweiten Inverterstufe ($n_2$, $p_2$) verbunden ist,
   - bei der die erste Inverterstufe ($n_1$, $p_1$) und die zweite Inverterstufe ($n_2$, $p_2$) mitgekoppelt sind, wobei ein Ausgang (50) der ersten Inverterstufe ($n_1$, $p_1$) mit einem Eingang (52) der zweiten Inverterstufe ($n_2$, $p_2$) verbunden ist und wobei ein Ausgang (51) der zweiten Inverterstufe ($n_2$, $p_2$) mit einem Eingang (53) der ersten Inverterstufe ($n_1$, $p_1$) verbunden ist,
   - bei der eine Rücksetzeinheit (5) zum Ausgleich einer Potentialdifferenz zwischen einem Ausgangspotential (A) der ersten Inverterstufe ($n_1$, $p_1$) und einem Ausgangspotential ($\bar{A}$) der zweiten Inverterstufe ($n_2$, $p_2$) vor-gesehen ist, und
   - bei der das Ausgangspotential (A) der ersten Inverterstufe ($n_1$, $p_1$) ein Vergleichsergebnis des ersten Quer-stroms ($I_1$) mit dem zweiten Querstrom ($I_2$) beschreibt.

2. Schaltungsanordnung nach Anspruch 1,
   bei der die erste Inverstufe ($n_1$, $p_1$) und die zweite Inverstufe ($n_2$, $p_2$) aus MOS-Feldeffekttransistoren aufgebaut sind.

3. Schaltungsanordnung nach Anspruch 1 oder 2,
   bei der die Rücksetzeinheit (5) aus einem MOS-Feldeffekttransistor besteht, der von einem Steuersignal Φ gesteuert wird, wobei ein erster Anschluß (54) der Rücksetzeinheit (5) mit dem Eingang (52) der zweiten Inverterstufe ($n_2$, $p_2$) verbunden ist, ein zweiter Anschluß (55) der Rücksetzeinheit (5) mit dem Eingang (53) der ersten Inverterstufe ($n_1$, $p_1$) verbunden ist, und ein Gate-Anschluß (56) der Rücksetzeinheit (5) mit dem Steuersignal Φ gekopppelt ist.

4. Schaltungsanordnung nach einem der Ansprüche 1 bis 3,
   bei der die erste Stromquelle ($Q_1$) aus einem ersten Neuron-MOS-Transistor (6) besteht.

**5.** Schaltungsanordnung nach Anspruch 4,
bei der die Referenzstromquelle ($Q_2$) aus einem zweiten Neuron-MOS-Feldeffekttransistor (7), mit der gleichen Polarität des ersten Neuron-MOS-Transistors (6), besteht.

**6.** Schaltungsanordnung nach Anspruch 5,
bei der in dem zweiten Neuron-MOS-Feldeffekttransistor (7) zwei Gate-Anschlüsse (60, 61) vorgesehen sind, wobei

- ein erster Gate-Anschluß (60) an ein ein erstes Betriebspotential ($V_{DD}$) gelegt ist und wobei
- ein zweiter Gate-Anschluß (61) an ein zweites Betriebspotential ($V_{SS}$) gelegt ist und
- durch das Größenverhältnis der Einkoppelkapazitäten des ersten Gate-Anschlusses (60) und des zweiten Gate-Anschlusses (61) des zweiten Neuron-MOS-Feldeffekttransistors (7) der zweite Querstrom ($I_2$) bestimmt ist.

**7.** Schaltungsanordnung nach Anspruch 6,
bei der in dem zweiten Neuron-MOS-Feldeffekttransistor (7) mindestens ein zusätzlicher Gate-Anschluß zur Feineinstellung des Referenzstroms ($I_2$) vorgesehen ist.

**8.** Schaltungsanordnung nach Anspruch 4,
bei der die Referenzstromquelle ($Q_2$) aus einem MOS-Feldeffekttransistor mit der Polarität des ersten Neuron-MOS-Feldeffekttransistors (6) besteht.

**9.** Schaltungsanordnung nach Anspruch 8,
bei der eine Einheit vorgesehen ist, die die Referenzstromquelle ($Q_2$) chipintern generiert.

**10.** Schaltungsanordnung nach einem der Ansprüche 1 bis 9,
bei der an dem Ausgang der ersten Inverterstufe (50) und dem Ausgang der zweiten Inverterstufe (51) jeweils eine zusätzliche Einheit (11, 12) vorgesehen ist zur Pufferung des Ausgangspotentials der ersten Inverterstufe (A) und des Ausgangspotentials der zweiten Inverterstufe ($\bar{A}$).

**11.** Schaltungsanordnung nach einem der Ansprüche 1 bis 9,
bei der an dem Ausgang der ersten Inverterstufe (50) oder dem Ausgang der zweiten Inverterstufe (51) eine zusätzliche Einheit (11, 12) vorgesehen ist zur Pufferung des Ausgangspotentials der ersten Inverterstufe (A) oder des Ausgangspotentials der zweiten Inverterstufe ($\bar{A}$).

**12.** Binäre Multipliziererzelle mit einer ersten und zweiten Schaltungsanordnung jeweils nach einem der Ansprüche 1 bis 9 zur Verknüpfung eines Multiplikatorbits ($V_{a1}$), eines Multiplikandenbits ($V_{a2}$), eines Summen-Bits eines vorangehenden Partialprodukts ($V_b$) und eines Übertrag-Bits eines vorangehenden Partialprodukts ($V_c$) als Eingangspotentiale zu einem Ausgangs-Summen-Bit (s), einem Ausgangs-Übertrags-Bit (ü), einem negierten Ausgangs-Summen-Bit ($\bar{s}$) und einem negierten Ausgangs-Übertrags-Bit (¯),

- bei der die erste Schaltungsanordnung (B1) zum Vergleich elektrischer Größen und die zweite Schaltungsanordnung (B2) zum Vergleich elektrischer Größen vorgesehen sind, wobei die erste Bewertungsschaltung (B1) zur Berechnung des Ausgangs-Übertrags-Bits (ü) vorgesehen ist und die zweite Bewertungsschaltung (B2) zur Berechnung des Ausgangs-Summen-Bits (s) vorgesehen ist,
- bei der ein dritter Neuron-MOS-Feldeffekttransistor (13) zur Realisierung der Referenzstromquelle ($Q_1$) der ersten Bewertungsschaltung (B1) vorgesehen ist,
- bei der ein vierter Neuron-MOS-Feldeffekttransistor (14) zur Realisierung der Referenzstromquelle ($Q_2$) der zweiten Bewertungsschaltung (B2) vorgesehen ist,
- bei der ein erster Bewertungstransistor (15) vorgesehen ist zur Realisierung der ersten Stromquelle ($Q_1$) der ersten Bewertungsschaltung (B1),
- bei der ein zweiter Bewertungstransistor (16) vorgesehen ist zur Realisierung der ersten Stromquelle ($Q_1$) der zweiten Bewertungsschaltung (B2),
- bei der die vier Eingangspotentiale ($V_{a1}$, $V_{a2}$, $V_b$ und $V_c$) an die Gate-Anschlüsse des dritten Neuron-MOS-Feldeffekttransistors (13) und an die Gate-Anschlüsse des vierten Neuron-MOS- Feldeffekttransistors (14) angelegt sind,
- bei der das negierte Ausgangs-Übertrags-Bit (¯) mit einem fünften Gate-Anschluß (20) des vierten Neuron-MOS-Feldeffekttransistors (14) verbunden ist,

- bei der die zwei Neuron-MOS-Feldeffekttransistoren (13, 14) derart realisert sind, daß die Eingangspotentiale ($V_{a1}$, $V_{a2}$, $V_b$ und $V_c$) für den dritten Neuron-MOS-Feldeffekttransistor (13) und den vierten Neuron-MOS-Feldeffekttransistor (14) unterschiedlich gewichtet sind entsprechend der verwendeten Schwellenwertgleichung für das Ausgangs-Summen-Bit (s) und der verwendeten Schwellenwertgleichung für das Ausgangs-Übertrags-Bit (ü).

**Claims**

1.  Circuit arrangement for comparing two electrical quantities,

    -   in which a first current source ($Q_1$) is provided, which supplies a first parallel-path current ($I_1$), which flows through a first inverter stage ($n_1$, $p_1$) constructed from transistors, the first current source ($Q_1$) being connected to a source terminal of the first inverter stage ($n_1$, $p_1$),
    -   in which a reference current source ($Q_2$) is provided, which supplies a second parallel-path current ($I_2$), which flows through a second inverter stage ($n_2$, $p_2$) constructed from transistors, the reference current source ($Q_2$) being connected to a source terminal of the second inverter stage ($n_2$, $p_2$),
    -   in which the first inverter stage ($n_1$, $p_1$) and the second inverter stage ($n_2$, $p_2$) are coupled with positive feedback, an output (50) of the first inverter stage ($n_1$, $p_1$) being connected to an input (52) of the second inverter stage ($n_2$, $p_2$) and an output (51) of the second inverter stage ($n_2$, $p_2$) being connected to an input (53) of the first inverter stage ($n_1$, $p_1$),
    -   in which provision is made of a reset unit (5) for equalizing a potential difference between an output potential (A) of the first inverter stage ($n_1$, $p_1$) and an output potential ($\bar{A}$) of the second inverter stage ($n_2$, $p_2$), and
    -   in which the output potential (A) of the first inverter stage ($n_1$, $p_1$) describes a result of comparison of the first parallel-path current ($I_1$) with the second parallel-path current ($I_2$).

2.  Circuit arrangement according to Claim 1,
    in which the first inverter stage ($n_1$, $p_1$) and the second inverter stage ($n_2$, $p_2$) are constructed from MOS field-effect transistors.

3.  Circuit arrangement according to Claim 1 or 2,
    in which the reset unit (5) comprises a MOS field-effect transistor which is controlled by a control signal $\Phi$, a first terminal (54) of the reset units (5) being connected to an input (52) of the second inverter stage ($n_2$, $p_2$), a second terminal (55) of the reset unit (5) being connected to the input (53) of the first inverter stage ($n_1$, $p_1$), and a gate terminal (56) of the reset unit (5) being coupled to the control signal $\Phi$.

4.  Circuit arrangement according to one of Claims 1 to 3,
    in which the first current source ($Q_1$) comprises a first neuron MOS transistor (6).

5.  Circuit arrangement according to Claim 4,
    in which the reference current source ($Q_2$) comprises a second neuron MOS field-effect transistor (7), with the same polarity as the first neuron MOS transistor (6).

6.  Circuit arrangement according to Claim 5,
    in which two gate terminals (60, 61) are provided in the second neuron MOS field-effect transistor (7),

    -   a first gate terminal (60) being connected to a first operating potential ($V_{DD}$), and
    -   a second gate terminal (61) being connected to a second operating potential ($V_{SS}$), and
    -   the second parallel-path current ($I_2$) being determined by the relative size of the coupling-in capacitances of the first gate terminal (60) and of the second gate terminal (61) of the second neuron MOS field-effect transistor (7).

7.  Circuit arrangement according to Claim 6,
    in which at least one additional gate terminal for fine setting of the reference current ($I_2$) is provided in the second neuron MOS field-effect transistor (7).

8.  Circuit arrangement according to Claim 4,
    in which the reference current source ($Q_2$) comprises a MOS field-effect transistor having the polarity of the first neuron MOS field-effect transistor (6).

9. Circuit arrangement according to Claim 8,
   in which a unit is provided which generates the reference current source ($Q_2$) on-chip.

10. Circuit arrangement according to one of Claims 1 to 9,
    in which an additional unit (11, 12) is in each case provided at the output of the first inverter stage (50) and the output of the second inverter stage (51), for the purpose of buffering the output potential of the first inverter stage (A) and the output potential of the second inverter stage ($\bar{A}$).

11. Circuit arrangement according to one of Claims 1 to 9,
    in which an additional unit (11, 12) is provided at the output of the first inverter stage (50) or the output of the second inverter stage (51), for the purpose of buffering the output potential of the first inverter stage (A) or the output potential of the second inverter stage ($\bar{A}$).

12. Binary multiplier cell having a first and second circuit arrangement in each case according to one of Claims 1 to 9 for combining a multiplier bit ($V_{a1}$), a multiplicand bit ($V_{a2}$), a sum bit of a preceding partial product ($V_b$) and a carry bit of a preceding partial product ($V_c$) as input potentials to form an output sum bit (*s*), an output carry bit (ü), an inverted output sum bit ($\bar{s}$) and an inverted output carry bit ($\bar{\text{ü}}$),

    - in which the first circuit arrangement (B1) for comparing electrical quantities and the second circuit arrangement (B2) for comparing electrical quantities are provided, the first evaluation circuit (B1) being provided for calculating the output carry bit (ü) and the second evaluation circuit (B2) being provided for calculating the output sum bit (s),
    - in which a third neuron MOS field-effect transistor (13) is provided for realizing the reference current source ($Q_1$) of the first evaluation circuit (B1),
    - in which a fourth neuron MOS field-effect transistor (14) is provided for realizing the reference current source ($Q_2$) of the second evaluation circuit (B2),
    - in which a first evaluation transistor (15) is provided for realizing the first current source ($Q_1$) of the first evaluation circuit (B1),
    - in which a second evaluation transistor (16) is provided for realizing the first current source ($Q_1$) of the second evaluation circuit (B2),
    - in which the four input potentials ($V_{a1}$, $V_{a2}$, $V_b$ and $V_c$) are applied to the gate terminals of the third neuron MOS field-effect transistor (13) and to the gate terminals of the fourth neuron MOS field-effect transistor (14),
    - in which the inverted output carry bit ($\bar{\text{ü}}$) is connected to a fifth gate terminal (20) of the fourth neuron MOS field-effect transistor (14),
    - in which the two neuron MOS field-effect transistors (13, 14) are realized in such a way that the input potentials ($V_{a1}$, $V_{a2}$, $V_b$ and $V_c$) for the third neuron MOS field-effect transistor (13) and the fourth neuron MOS field-effect transistor (14) are weighted differently in accordance with the threshold value equation used for the output sum bit (s) and the threshold value equation used for the output carry bit (ü).

## Revendications

1. Circuit pour la comparaison de deux grandeurs électriques,

   - dans lequel il est prévu une première source de courant ($Q_1$) qui fournit un premier courant transversal ($I_1$) qui passe par un premier étage inverseur ($n_1$, $p_1$) construit à partir de transistors, la première source de courant ($Q_1$) étant reliée à une borne de source du premier étage inverseur ($n_1$, $p_1$),
   - dans lequel il est prévu une source de courant de référence ($Q_2$) qui fournit un deuxième courant transversal ($I_2$) qui passe par un deuxième étage inverseur ($n_2$, $p_2$) construit à partir de transistors, la source de courant de référence ($Q_2$) étant reliée à une borne de source du deuxième étage inverseur ($n_2$, $p_2$),
   - dans lequel le premier étage inverseur ($n_1$, $p_1$) et le deuxième étage inverseur ($n_2$, $p_2$) sont couplés, une sortie (50) du premier étage inverseur ($n_1$, $p_1$) étant reliée à une entrée (52) du deuxième étage inverseur ($n_2$, $p_2$) et une sortie (51) du deuxième étage inverseur ($n_2$, $p_2$) étant reliée à une entrée (53) du premier étage inverseur ($n_1$, $p_1$),
   - dans lequel il est prévu une unité de remise à l'état initial (5) pour compenser une différence de potentiel entre un potentiel de sortie ..(A) du premier étage inverseur ($n_1$, $p_1$) et un potentiel de sortie ($\bar{A}$) du deuxième étage

inverseur ($n_2$, $p_2$), et

- dans lequel le potentiel de sortie (A) du premier étage inverseur ($n_1$, $p_1$) décrit un résultat de comparaison du premier courant transversal ($I_1$) avec le deuxième courant transversal ($I_2$).

2. Circuit selon la revendication 1, dans lequel le premier étage inverseur ($n_1$, $p_1$) et le deuxième étage inverseur ($n_2$, $p_2$) sont construits à partir de transistors à effet de champ MOS.

3. Circuit selon la revendication 1 ou 2, dans lequel l'unité de remise à l'état initial (5) est constituée d'un transistor à effet de champ MOS qui est commandé par un signal de commande Φ, une première borne (54) de l'unité de remise à l'état initial (5) étant reliée à l'entrée (52) du deuxième étage inverseur ($n_2$, $p_2$), une deuxième borne (55) de l'unité de remise à l'état initial (5) étant reliée à l'entrée (53) du premier étage inverseur ($n_1$, $p_1$) et une borne de grillé (56) de l'unité de remise à l'état initial (5) étant couplée au signal de commande Φ.

4. Circuit selon l'une des revendications 1 à 3, dans lequel la première source de courant ($Q_1$) est constituée d'un premier transistor MOS à neurones (6).

5. Circuit selon la revendication 4, dans lequel la source de courant de référence ($Q_2$) est constituée d'un deuxième transistor à effet de champ MOS à neurones (7) avec la même polarité que le premier transistor MOS à neurones (6).

6. Circuit selon la revendication 5, dans lequel il est prévu dans le deuxième transistor à effet de champ MOS à neurones (7) deux bornes de grilles (60, 61),

- une première borne de grille (60) étant à un premier potentiel de fonctionnement ($V_{DD}$),
- une deuxième borne de grille (61) étant à un deuxième potentiel de fonctionnement ($V_{SS}$), et
- le deuxième courant transversal ($I_2$) étant déterminé par le rapport de grandeur des capacités d'introduction de la première borne de grille (60) et de la deuxième borne de grille (61) du deuxième transistor à effet de champ MOS à neurones (7).

7. Circuit selon la revendication 6, dans lequel il est prévu dans le deuxième transistor à effet de champ MOS à neurones (7) au moins une borne de grille supplémentaire pour le réglage précis du courant de référencé ($I_2$).

8. Circuit selon la revendication 4, dans lequel la source de courant de référence ($Q_2$) est constituée d'un transistor à effet de champ MOS ayant la polarité du premier transistor à effet de champ MOS à neurones (6).

9. Circuit selon la revendication 8, dans lequel il est prévu une unité qui génère à l'intérieur du chip la source de courant de référence ($Q_2$).

10. Circuit selon l'une des revendications 1 à 9, dans lequel il est prévu à la sortie du premier étage inverseur (50) et à la sortie du deuxième étage inverseur (51) à chaque fois une unité supplémentaire (11, 12) pour une mise en tampon du potentiel de sortie du premier étage inverseur (A) et du potentiel de sortie du deuxième étage inverseur ($\bar{A}$).

11. Circuit selon l'une des revendications 1 à 9, dans lequel il est prévu à la sortie du premier étage inverseur (50) ou à la sortie du deuxième étage inverseur (51) une unité supplémentaire (11, 12) pour une mise en tampon du potentiel de sortie du premier étage inverseur (A) ou du potentiel de sortie du deuxième étage inverseur ($\bar{A}$).

12. Cellule de multiplicateur binaire avec des premier et deuxième circuits à chaque fois selon l'une des revendications 1 à 9 pour la combinaison d'un bit de multiplicateur ($V_{a1}$), d'un bit de multiplicande ($V_{a2}$), d'un bit de somme d'un sous-produit précédent ($V_b$) et d'un bit de retenue d'un sous-produit précédent ($V_c$) comme potentiels d'entrée pour donner un bit de somme de sortie (s), un bit de retenue de sortie (ü), un bit de somme de sortie inversé ($\bar{s}$) et un bit de retenue de sortie inversé ($\bar{ü}$),

- dans lequel le premier circuit (B1) est prévu pour la comparaison de grandeurs électriques et le deuxième circuit (B2) est prévu pour la comparaison de grandeurs électriques, le premier circuit d'évaluation (B1) étant prévu pour le calcul du bit de retenue de sortie (ü) et le deuxième circuit d'évaluation (B2) étant prévu pour le calcul du bit de somme de sortie (s),
- dans lequel un troisième transistor à effet de champ MOS à neurones (13) est prévu pour la réalisation de la source de courant de référence ($Q_1$) du premier circuit d'évaluation (B1),

- dans lequel un quatrième transistor à effet de champ MOS à neurones (14) est prévu pour la réalisation de la source de courant de référence ($Q_2$) du deuxième circuit d'évaluation (B2),

- dans lequel un premier transistor d'évaluation (15) est prévu pour la réalisation de la première source de courant ($Q_1$) du premier circuit d'évaluation (B1),

- dans lequel un deuxième transistor d'évaluation (16) est prévu pour la réalisation de la première source de courant ($Q_1$) du deuxième circuit d'évaluation (B2),

- dans lequel les quatre potentiels d'entrée ($V_{a1}$, $V_{a2}$, $V_b$ et $V_c$) sont appliqués aux bornes de grilles du troisième transistor à effet de champ MOS à neurones (13) et aux bornes de grilles du quatrième transistor à effet de champ MOS à neurones (14),

- dans lequel le bit de retenue de sortie inversé ($\bar{\bar{u}}$) est relié à une cinquième borne de grille (20) du quatrième transistor à effet de champ MOS à neurones (14),

- dans lequel les deux transistors à effet de champ MOS à neurones (13, 14) sont réalisés de telle sorte que les potentiels d'entrée ($V_{a1}$, $V_{a2}$, $V_b$ et $V_c$) pour le troisième transistor à effet de champ MOS à neurones (13) et pour le quatrième transistor à effet de champ MOS à neurones (14) sont pondérés différemment selon l'équation à valeur de seuil utilisée pour le bit de somme de sortie (s) et selon l'équation à valeur de seuil utilisée pour le bit de retenue de sortie (ü).

# F I G 1

# F I G 2

FIG 3

FIG 4

# F I G 5

## FIG 6

## FIG 7

# FIG 8

# FIG 9

# FIG 10

# FIG 11

# FIG 12

# FIG 13